(19) Europäisches Patentamt
European Patent Office
Office européen des brevets

(11) EP 0 818 423 A1

# (12) EUROPEAN PATENT APPLICATION

(43) Date of publication:
**14.01.1998 Bulletin 1998/03**

(51) Int. Cl.[6]: **C02F 5/14**

(21) Application number: **97202064.8**

(22) Date of filing: **04.07.1997**

(84) Designated Contracting States:
**AT BE CH DE DK ES FI FR GB GR IE IT LI LU MC NL PT SE**

(30) Priority: **11.07.1996 GB 9614581**

(71) Applicant:
**FMC CORPORATION (UK) LIMITED**
**Manchester M17 1WT (GB)**

(72) Inventors:
- **Patel, Suresh**
  **Swinton, Manchester M27 5NJ (GB)**
- **Lees, Michael John**
  **Davyhulme, Manchester M41 0UQ (GB)**

(74) Representative:
**Hamilton, Raymond**
**FMC Corporation (UK) Limited**
**Process Additives Division**
**Tenax Road**
**Trafford Park**
**Manchester M17 1WT (GB)**

## (54) Scale inhibition process

(57) Mixtures of (a) polymaleic acid scale inhibitor have been found to be surprisingly effective in inhibiting the formation of brucite scale. The invention finds particular application in desalination plants where conventional carbonate scale inhibitors have not been effective in preventing the formation of scale on the demister pads. Mixtures of comprising (a) and (b) in a proportion of 2:1 to 1:2 are preferred and used at concentration of 0.5 to 20 ppm.

EP 0 818 423 A1

## Description

### FIELD OF THE INVENTION

This invention relates to novel processes to inhibit the formation of scales consisting wholly or substantially of brucite in aqueous systems. The invention finds particular application in desalination plants where the formation of brucite scale is a particular problem.

### BACKGROUND TO THE INVENTION

The use of anti-scaling additives in aqueous systems to inhibit the deposition of scale formed from the salts of divalent metals such as calcium and magnesium is standard practice in a number of industries. The reduction in the build-up of scale which can be achieved is beneficial in reducing fouling of the system and the frequency with which the system must be closed down in order to remove scale deposits. Numerous anti-scaling additives have been proposed as useful additives to aqueous systems including certain polyphosphates, polyacrylic acids and their salts polymethacrylic acids and their salts, polyacrylamides, lignin sulphonic acids and their salts, tannin, napthalene sulphonic acid, formaldehyde condensation products, phosphonic acids and their salts, hydrolysed polymaleic acids and their salts and hydrolysed copolymers and terpolymers of maleic anhydride and salts thereof.

The use of these products particularly the acrylic and maleic polymers is widely recognised as being effective in inhibiting the build-up of calcium carbonate and calcium sulphate scale.

More recently there have been a number of proposals for additives which are useful in reducing the formation of scale composed wholly or primarily from the salts of other anions such as silicate and phosphate.

One particular industrial process in which anti-scalant additives are widely employed is the desalination of sea-water. One of the most commonly practised desalination techniques is the multi-stage flash desalination process. In this process hot, concentrated sea-water (brine) is passed into a flash chamber which is maintained at a pressure which will cause the brine to boil. Part of the brine is evaporated and the water vapour produced is condensed on the surface of heat exchanger tubes in the upper part of the flash chamber cooled by circulating brine. The condensed vapour is collected as product water. The heat given up by the condensing vapours raises the temperature of the circulating brine and thereby reduces the amount of energy required in the process to heat it. Several such flash chambers are connected in series with progressively lower pressures being maintained in each chamber to form a multi-stage flash evaporator.

The formation of scale on the surface of the heat exchangers in the chambers in which the cool sea-water is heated is a recognised problem in these desalination processes. The formation of scale which is composed at least predominantly of calcium carbonate can be controlled by the addition of known anti-scalants such as the polymaleic acids. However, these additives are not wholly effective in preventing the formation of scale elsewhere in the desalination plant.

Particular desalination plants can encounter a problem of scale formation on the demister pads. The demister pads are normally stainless steel meshes through which the vapour produced by the evaporation of brine in the flash chambers is passed in order to remove entrained brine droplets and suspended solids. Our investigations have revealed that the scale formed on the demister pad is formed wholly or substantially from magnesium hydroxide (brucite). The inhibitors used to prevent the formation of scale elsewhere in the desalination plant are not effective in preventing the build up of this scale.

One proposal to reduce the formation of scale in desalination processes is described in USP 5152403. The patent discloses the addition of a combination of a particular homopolymer of maleic anhydride and an acrylate polymer (including inter alia a phosphinopolycarboxylic acid) to a desalination plant in order to inhibit the formation of scale.

These combinations are stated to be effective in inhibiting the deposition of scale forming salts derived from calcium, magnesium, barium or strontium cations and sulphate, carbonate, hydroxide, phosphate and silicate anions. The tests reported in this patent disclose the efficacy of these combinations in inhibiting the formation of carbonate scale. We have now discovered that a combination of a homo or copolymer of maleic anhydride and a phosphino polycarboxylic acid is surprisingly effective in inhibiting the formation of brucite scale. The two components of this combination display synergism in that the combination is more effective in inhibiting the formation of brucite scale than either of the components used in isolation.

Accordingly from a first aspect this invention provides a method for the treatment of aqueous systems in order to inhibit the formation of a scale consisting wholly or substantially of magnesium hydroxide which comprises adding to that system:-

(i) a hydrolysed polymer of maleic anhydride having a weight average molecular weight of from 200 to 2000 or a water soluble salt thereof and
(ii) a phosphinoacrylic acid telomer having a weight average molecular weight of from 800 to 5000.

The amount of compounds (i) and (ii) which is added to the aqueous system will be at least that which is sufficient to provide the desired degree of inhibition. Generally the total concentration of (i) and (ii) in the aqueous system will be in the range 0.1 to 50 ppm and more usually in the range 0.5 to 20 ppm.

The components (i) and (ii) may be added separately normally in the form of their aqueous solutions. More conveniently components (i) and (ii) may be premixed to form a single solution which is then added to the aqueous system. The components may not be completely compatible in aqueous solution especially in a concentrated aqueous solution. Any problems of incompatibility can usually be overcome by adjusting the pH of the solution or by diluting the solution with water. The relative quantities of (i) and (ii) which are added to the system may vary through a wide range. Generally the ratio of the weight of (i) to the weight of (ii) will be in the range 5:1 to 1:5 and more usually it will be in the range 2:1 to 1:2.

The polymers of maleic anhydride useful in the processes of this invention may be a homopolymer of maleic anhydride or a copolymer of maleic anhydride with one or more comonomers. The homopolymers of maleic anhydride (or maleic acid) are preferred.

Examples of comonomers from which useful copolymers can be produced include acrylic acid, methacrylic acid, α-hydroxy acrylic acid, crotonic acid, itaconic acid, aconitic acid, itaconic acid, fumaric acid, ethyl acrylate, methyl methacrylate, acrylonitrile, acrylamide, vinyl acetate, styrene, α-methyl styrene, methyl vinyl ketone, acrolein, ethylene, propylene, vinyl sulphonic acid, allyl sulphonic acid, methallyl sulphonic acid, styrene sulphonic acid, 2-acrylamido-2-methyl-propane sulphonic acid, sulphoethyl (meth) acrylate, sulphopropyl (meth) acrylate and sulphoethylmaleimide.

The polymers of maleic anhydride may be prepared by polymerisation of the monomer or monomers in an aqueous or organic solvent using a free-radical initiator. The organic solvent may be a reactive solvent such as xylene, toluene, ethylbenzene, carbon tetrachloride or acetonitrile. Such solvents may be incorporated to a minor degree in the product.

The preparation of these maleic acid based polymers is well known in the art. Suitable processes have been described in GB 1369429, GB 1414918, USP 3919258, EPA 337694, EPA 369303 and others. A number of polymaleic acid based polymers are available as articles of commerce. All those maleic acid based polymers which find use as carbonate scale inhibitors are useful in this invention.

The phosphino polycarboxylic acids useful in the processes of this invention include those having the general formula I

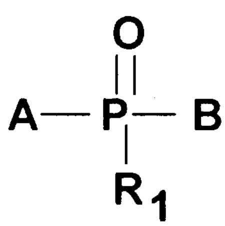 I

and salts thereof wherein

A is a random polymeric residue comprising at least one unit of formula II

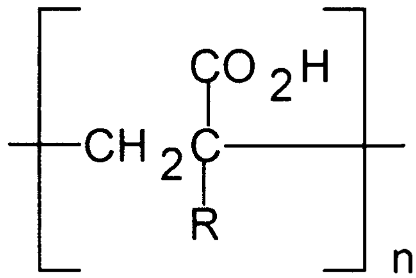 II

and optionally at least one unit of formula III, different from a unit of formula II,

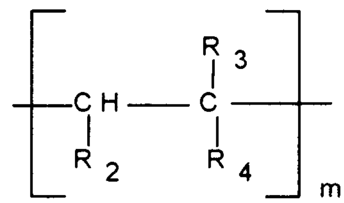 III

and

B is hydrogen or a residue A; wherein

m and n are integers such that the sum of m+n is an integer of from 3 to 100, the ratio of n:m being from 99 to 1:1 to 99 (when a unit of formula III is present), provided that the resulting telomers are water-soluble and wherein m and/or n in a residue A may be the same as or different from m and/or n in a residue B;

R is hydrogen, methyl or ethyl;

$R_1$ is a residue -OX, wherein X is hydrogen, an alkali- or alkaline earth metal, ammonium or an amine residue;

$R_2$ is a hydrogen, methyl or a residue $-CO_2R_5$, wherein $R_5$ is hydrogen or a straight-or branched chain alkyl residue having 1 to 8 carbon atoms;

$R_3$ is hydrogen, a straight- or branched chain alkyl residue having 1 to 4 carbon atoms, hydroxymethyl or a residue $-CO_2R_6$, wherein $R_6$ is hydrogen, a residue of formula

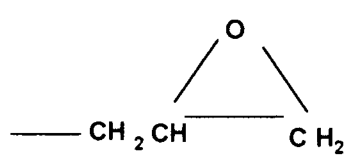

a residue of formula $-[CH_2-CH(R_9)O]_zH$ (in which $R_9$ is hydrogen, methyl or phenyl and z is an integer from 1 to 20) or $R_6$ is a straight- or branched chain alkyl residue having 1 to 8 carbon atoms and optionally substituted by a group $SO_3M$ or COOM (in which M is hydrogen or an alkali- or alkaline

earth metal atom);

$R_4$ is a residue $-CO_2R_6$ (wherein $R_6$ has its previous significance), a straight-or branched alkyl residue having 1 to 8 carbon atoms optionally substituted by one to three carboxylic acid groups, a phenyl residue, an acetoxy residue, hydroxymethyl, an acetoxymethyl residue, $-SO_3M$, $-CH_2SO_3M$ or $-PO_3M_2$ or $PO_3M'_2$ (in which M is hydrogen or an alkali metal or alkaline earth metal atom and M' is M or $C_1$-$C_4$-alkyl), a residue $-CONR_7R_8$ (wherein $R_7$ and $R_8$ are the same or different and each is hydrogen, a straight- or branched chain alkyl residue having 1 to 8 carbon atoms, hydroxymethyl or a residue $-CH(OH)-CO_2M$, $-C(CH_3)_2CH_2SO_3M$ or $-C(CH_3)_2CH_2PO_3M_2$, wherein M has its previous significance or $-N(R_{10})COCH_3$, in which $R_{10}$ is hydrogen or $C_1$-$C_4$ straight or branched chain alkyl.

$C_1$-$C_4$ alkyl residues $R_3$ and $R_{10}$ are eg methyl, ethyl, n-propyl, isopropyl and n-butyl residues.

$C_1$-$C_8$ alkyl residues $R_4$, $R_5$, $R_6$, $R_7$ and $R_8$ are eg methyl, ethyl, n-propyl, isopropyl, n-butyl, n-pentyl n-hexyl and n-octyl residues. Carboxyl-substitued $C_1$-$C_8$ alkyl residues $R_4$ include eg carboxymethyl, carboxyethyl, carboxypropyl, 1,1-dicarboxymethyl or butane-2,3,4-tricarboxylic acid.

Alkali metal atoms X and/or M are, particularly, sodium or potassium atoms, and alkaline earth metal atoms X and/or M are calcium, barium and strontium atoms. Amine residues X are eg, ammonium, $-N{+}H(CH_3)_3$, $-N{+}H(C_2H_5)_3$ or $-N{+}H(CH_2CH_2OH)_3$.

Preferably B is a residue A as hereinbefore defined and preferably $R_1$ is a residue - OX, wherein X has its previous significance, but is especially an alkali metal, in particular sodium.

Preferred compounds of formula I are those wherein B is a residue A, wherein R is hydrogen or methyl and A and B are homopolymeric residues comprising a unit having the formula II. Where A and B represent a random copolymeric residue comprising at least one unit of formula II and at least one unit of formula III, a preferred group of compounds are those of formula I therein $R_2$ is hydrogen or a residue $-COOR_5$, in which $R_5$ is hydrogen, or $C_1$-$C_8$ alkyl, $R_3$ is hydrogen or $-CO_2R_6$ (wherein $R_6$ has its previous significance) and $R_4$ is a residue $-COOR_6$, wherein $R_6$ is hydrogen or $C_1$-$C_4$ alkyl or $R_4$ is $C_1$-$C_8$ alkyl optionally substituted by one to three carboxyl groups, a phenyl residue, acetomethyl, $-SO_3M$ or $-PO_3M_2$ (in which M has its previous significance), or $-CONR_7R_8$ (wherein $R_7$ and $R_8$ have their previous significance; and the sum of m and n is from 3 to 32.

These phosphinopolycarboxylic acids may be prepared using processes which are known in the art. Suitable preparative procedures include those disclosed in USP 4046707 and USP 4681686. In general those processes comprise the reaction of phosphorous acid or a hypophosphite with one or more polymerisable monomers in the presence of a suitable initiator. Examples of suitable initiators include bisazo-isobutyronitrile, benzoyl peroxide, ditertiary butyl peroxide, hydrogen peroxide and sodium persulphate. The reaction may be carried out in a solvent such as water, ethanol or dioxan. The product of those preparative processes normally comprises the phosphinopolycarboxylic acid in admixture with unreacted starting materials and polymerised species which do not contain a phosphino group. These products may be purified or they may be used directly in the processes of this invention.

The methods of this invention find application in systems where the formation of scale consisting predominantly or wholly of brucite is a problems. Brucite scale may be encountered in a particular location and under particular conditions in a variety of different aqueous sytems. It is also possible that brucite scale may form in the presence of other scale inhibitors e.g. conventional inhibitors used to prevent the formation of carbonate scale.

Aqueous systems treated in accordance with the invention may be wholly or partly of water. Of particular interest are desalination plants, cooling water systems, steam generating systems, reverse osmosis equipment, bottle washing plants, pulp and paper manufacturing equipment, sugar evaporator equipment, soil irrigation systems, hydrostatic cookers, gas scrubbing systems, flue gas desulphurisation systems, closed circuit heating systems, aqueous-based refrigeration systems, oil production and drilling systems, oil refineries, waste treatment plants, crystallisers, metal recovery systems and photographic developing baths.

Not all of these systems are known to be susceptible to the formation of scale formed substantially from brucite. In general brucite scale tends to form in systems which contain a high concentration of dissolved salts especially dissolved magnesium salts and which are subject to an increase in pH. Such conditions may be found only in particular locations in these systems. The formation of brucite scale on the demister pads multi-stage flash desalination plants is we believe favoured by the rapid evolution of carbon dioxide from the brine as it enters the flash chambers. The resultant increase in the pH of the water is believed to contribute toward the tendency of scale consisting substantially or wholly of brucite to form.

The processes of his invention find particular application to the inhibition of the formation of brucite scale on the demister pads in multi-stage flash desalination plants. The processes may be carried out by introducing an appropriate concentration of additives (i) and (ii) to the brine entering the evaporators or by applying a solution of (i) and (ii) to the demister pads. In general addition of (i) and (ii) to the brine is more convenient as this can utilise existing equipment for dosing scale inhibitors.

We have discovered that the methods of this invention are also effective in inhibiting the formation of calcium

carbonate scale on the surface of the heat-exchangers in a multi-stage flash evaporation plant. Provided the inhibitors are added to the plant in a manner which ensures that an effective concentration of inhibitor is present in the brine the formation of carbonate scale will be inhibited. This the invention provides a single treatment process which is effective in inhibiting the formation of scale on the heat exchangers and the demister pads.

The composition of the invention may be used alone, or in conjunction with other materials known to be useful in the treatment of aqueous systems. In the treatment of systems such as cooling water systems, air-conditioning systems, steam-generating systems, sea-water evaporator systems, hydrostatic cookers, and closed circuit heating or refrigerant systems, corrosion inhibitors may be used such as, for example, water soluble zinc salts; phosphates; polyphosphates; phosphonic acids and their salts, for example, hydroxyethyl diphosphonic acid (HEDP), nitrilotris methylene phosphonic acid and methylamino dimethylene phosphonocarboxylic acids and their salts, for example, those described in German Offenlegungsschrift 2632774, hydroxyphosphonoacetic acid, 2-phosphonobutante-1,2,4-tricarboxylic acid and those disclosed in GB 1572406; nitrates, for example, sodium nitrate; nitrites, eg, sodium nitrate; molybdates, eg, sodium molybdate; tungstates; silicates, eg sodium silicate; benzotriazole, bis-benzotriazole or copper deactivating benzotriazole or tolutriazole derivatives or their Mannich base derivatives; mercaptobenzotriazole; N-acyl sarcosines; N-acylimino diacetic acids, ethanolamines; fatty amines; and polycarboxylic acids, including polymers or copolymers of acrylic acid. Moreover, in such systems, the composition used according to the invention may be used in conjunction with further dispersing and/or threshold agents, eg, hydrolysed polyacrylonitrile, liginin sulphonic acid and its salts, tannin, naphthalene sulphonic acid/formaldehyde condensation products, starch and its derivatives, cellulose, styrene/maleic anhydride copolymers and sulfonated styrene homopolymers, eg, those described in US patent number 4,374,733 and combinations thereof. Specific threshold agents such as, for example, 2-phosphono-butane-1,2,4-tri-carboxylic acid (PBSAM), hydroxyethyl diphosphonic acid (HEDP), alkyl phosphonic acids, hydroxyphosphonoacetic acid, 1-aminoalkyl-1,1-diphosphonic acids and their salts, and alkali metal polyphosphates, may also be used.

Particularly interesting additive packages are those comprising compositions of the invention with one or more of maleic acid copolymers, especially terpolymers of maleic acid with ethyl acrylate and vinyl acetate or substituted copolymers of maleic acid, hydroxyphosphonoacetic acid, HEDP, PBSAM and triazoles such as tolutriazole, molybdates and nitrites.

Other materials which may be used together with compositions of the invention include precipitating agents such as alkali metal orthophosphates and carbonates; oxygen scavengers such as alkali metal sulphites and hydrazines; sequestering agents such as nitrilotriacetic acid and its salts; antifoaming agents such as silicones, eg, polydimethylsiloxanes, distearylsebacamide, distearyl adipamide and related products derived from ethylene oxide and/or propylene oxide condensations, in addition to fatty alcohols such as capryl alcohols and their ethylene oxide condensates; and biocides, eg, amines, quaternary ammonium compounds, chlorophenols sulphur-containing compounds such as sulphones, methylene bis thiocyanates and carbamates, isothiazolones, brominated propionamide, triazines, phosphonium compounds, chlorine and chlorine-release agents bromine, and bromine-release agents, and organometallic compounds such as tributyl tin oxide.

The invention is illustrated by the following Examples. Molecular weights given in the Examples are weight average molecular weights.

Example 1

A series of scale inhibiting compositions were tested using the following procedures:-

Brucite Inhibition Test:

The test involves pumping synthetic sea-water through a 1 metre stainless steel coil of 1.1 mm internal diameter which is immersed in a water bath at 90°C. Any deposition of scale reduces the internal diameter of the tube, causing an increase in pumping pressure. The change in pressure is monitored via a pressure transducer.

The typical sea-water composition:

| | |
|---|---|
| Calcium ($Ca^{++}$) | 400 ppm |
| Magnesium ($Mg^{++}$) | 1202 ppm |
| Chloride ($Cl^-$) | 18711 ppm |
| Sodium ($Na^+$) | 10522 ppm |
| Carbonate ($CO_3^{--}$) | 184 ppm |
| Sulphate ($SO_4^{--}$) | 2623 ppm |
| Potassium ($K^+$) | 395 ppm |
| Total dissolved solids | 34,037 |

was obtained by pumping two solutions through a small mixing vessel immediately before entering the stainless steel coil. The first contains sodium carbonate dissolved in sodium chloride solution and the second contains the remaining ions dissolved in sodium chloride solution.

The first, higher pH, solution was pumped through the coil for 10 minutes mixed with deionised water from the second pump. The deionised water was then replaced by the second solution, maintaining the steady flow rate of approximately 1.7 l/hr.

Elemental analysis demonstrated that the scale formed in the capillary title, resulting from this exposure

of the second solution to an increase in pH, contains magnesium with very little or no calcium.

The additive was introduced with the first solution and its performance assessed by its ability to inhibit scale formation, indicated by pressure increase during the first 5 minutes, and subsequent growth during 30 minutes. In the absence of additives the pressure rose very sharply in the first few minutes indicating rapid scale formation. Effective brucite inhibitors would be expected to reduce the rate of pressure increase sigificantly during the initial stage and prevent further growth - indicated by a steady pressure over the second stage. The lower this pressure, the more effective the additive.

Carbonate Inhibition Test

This test assessed the ability of additives to inhibit the precipitation of calcium carbonate from solutions relevant to desalination.

20 mg aragonite seed crystals were placed in a clean bottle. To this were added 50 mls of a solution of sodium chloride, calcium nitrate and magnesium chloride, followed by the additive under test. 50 mls of a sodium chloride and sodium carbonate solution are then added to give an overall composition of:-

| | |
|---|---|
| Calcium ($Ca^{++}$) | 125 ppm |
| Magnesium ($Mg^{++}$) | 375 ppm |
| Sodium ($Na^{+}$) | 11941 ppm |
| Chloride ($Cl^{-}$) | 19292 ppm |
| Carbonate ($CO_3^{--}$) | 181 ppm |

The sealed bottle was than shaken in a water bath at 85°C for 30 minutes. After this time the solution was filtered to remove any precipitated calcium carbonate and the calcium content of the solution determined by EDTA titration.

The additive's performance is assessed by how well it maintains calcium in solution. Activity is expressed as % calcium carbonate inhibition.

The following solutions were subjected to the test described where

(A) A solution comprising equal parts by weight of additive B and additive C
(B) A hydrolysed homopolymer of maleic anhydride having a molecular weight of approximately 600 prepared using the processes described in GB 1411063
(C) A phosphinopolycarboxylic acid having a molecular weight of approximately 1800 prepared by the reaction of 1 molar proportion of sodium hyphophosphite with 9 molar proportions of acrylic acid using the processes described in USP 4046707.

The solutions were added so as to provide a concentration of 1.5 ppm of solids in the aqueous medium under test. The brucite tests was also run using a solution with no scale inhibiting additives as a reference. The results of the brucite inhibition test is presented in Figure 1. The results of the carbonate inhibition test is presented in Figure 2.

Example 2

Inhibition of Magnesium Hydroxide Precipitation

The following test was used to evaluate inhibitors:- 1000mls of seawater was placed in a water bath at 90°C for 20 minutes. The pH of the solution was slowly adjusted to pH8, (using sodium hydroxide solution) and maintained at pH8 for 30 minutes at 90°C.
The solution was removed form the water bath and allowed to cool to room temperature and then the turbidity was measured using a Hach Turbimeter. This turbidity T blank is of the control (no inhibitor present).

To evaluate an inhibitor, the inhibitor was placed into the seawater at the required dose level and the above procedure was repeated. The turbidity measure was T inhibitor.

The lower the turbidity of the seawater at the end of the test, the better the inhibitor is at controlling magnesium hydroxide precipitation.

The inhibition of magnesium hydroxide was calculated as a percentage by the following equation:

$$\% \text{ Inhibition} = 100 - (\text{Tinhibitor}/\text{Tblank} \times 100)$$

This method was used to measure the inhibition of the solutions A B and C described in Example 1 at a dose level of 10 mg/litre. The results are presented in Figure 3. The solid line represents the results obtained by experiment. The dashed line indicates the results predicted if additives B and C did not interact.

**Claims**

**1.** A method for the treatment of aqueous systems in order to inhibit the formation of a scale consisting wholly or substantially of magnesium hydroxide which comprises adding to that system:-

(i) a hydrolysed homopolymer (or copolymer) of maleic anhydride having a weight average molecular weight of from 200 to 2000 or a water soluble salt thereof and
(ii) a phosphinoacrylic acid telomer having a weight average molecular weight of from 800 to 5000.

**2.** A method according to claim 1 characterised in that the aqueous system comprises from 0.1 to 50 ppm in aggregate of (i) and (ii).

**3.** A method according to either of the preceding

claims characterised in that the aqueous system comprises from 0.5 to 20 ppm in aggregate of (i) and (ii).

**4.** A method according to any of the preceding claims wherein the ratio of the weight of (i) added to the system to the weight of (ii) added to the system is in the range 5:1 to 1:5.

**5.** A method according to claim 4 characterised in that the ratio of the weight of (i) added to the weight of (ii) added is in the range 2:1 to 1:2.

**6.** A method according to any of the preceding claims characterised in that the aqueous system is contained within a sea-water evaporation plant.

**7.** A method according to claim 6 characterised in that (i) and (ii) are present in the brine which enters the evaporation chambers.

**8.** A method according to claim 6 characterised in that (i) and (ii) are applied as an aqueous solution or solutions to the surface of the demister pads.

Figure 1

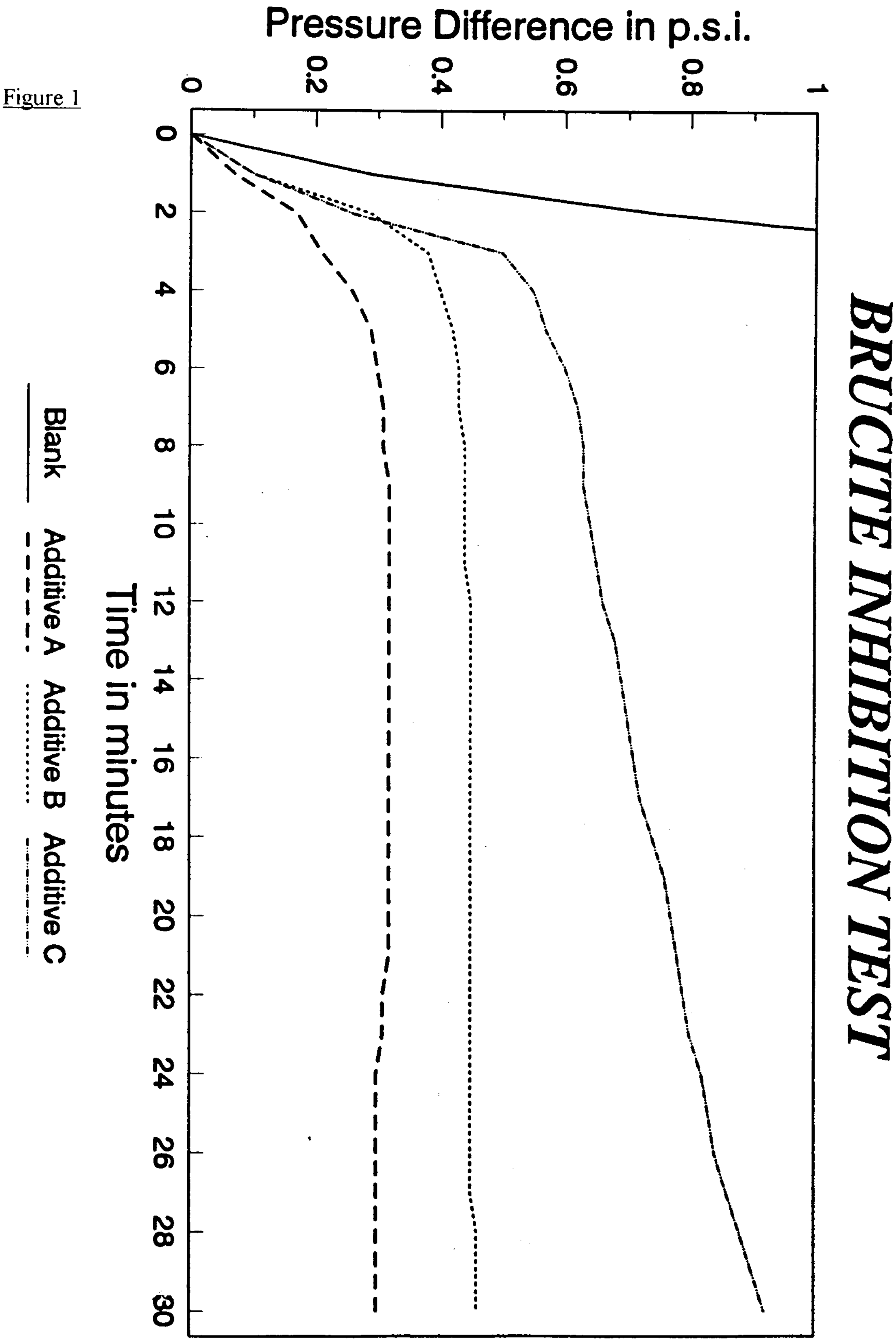


FIGURE 1

Figure 2

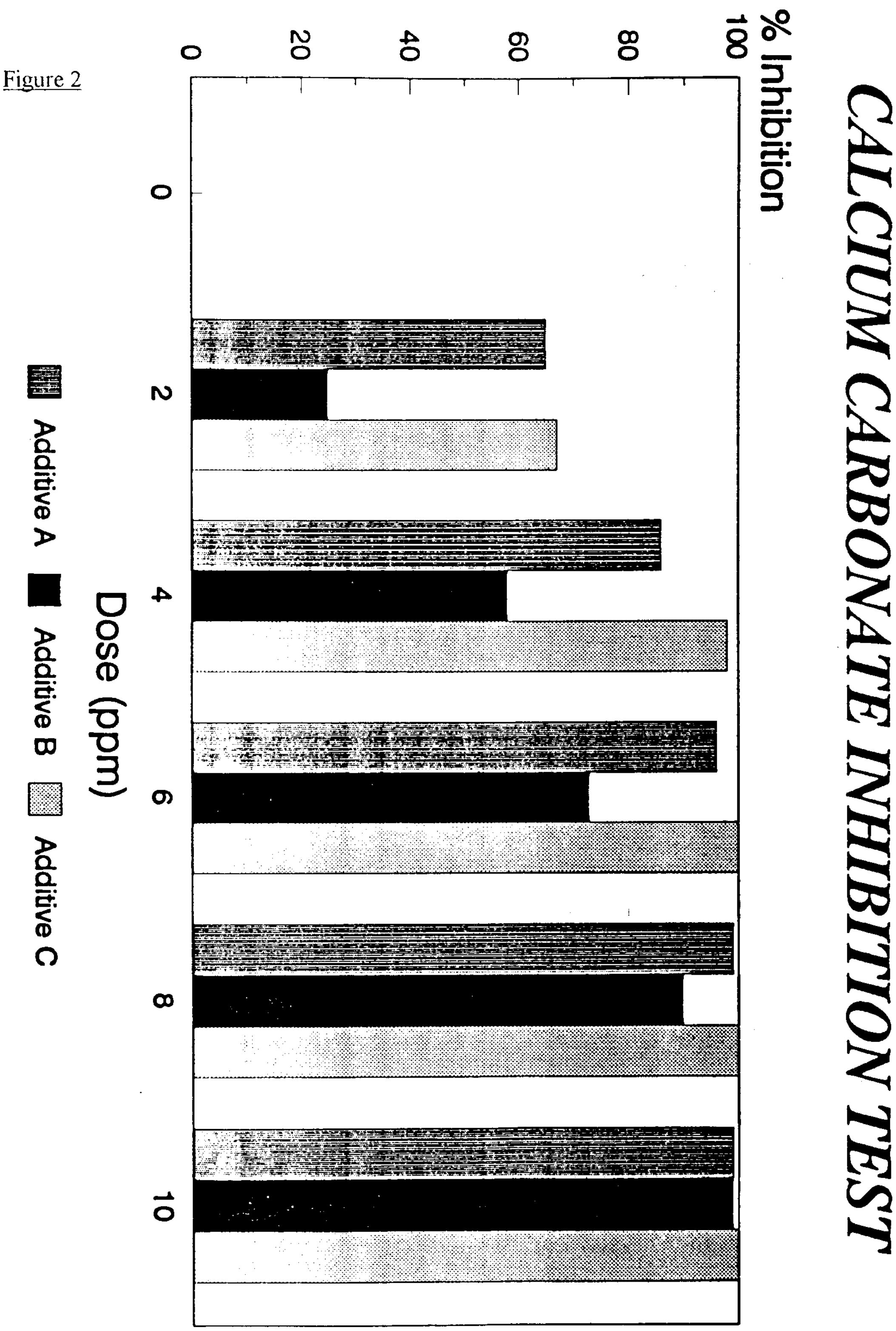
FIGURE 2
CALCIUM CARBONATE INHIBITION TEST
% Inhibition
100
80
60
40
20
0
0
2
4
6
8
10
Dose (ppm)
Additive A
Additive B
Additive C

Figure 3

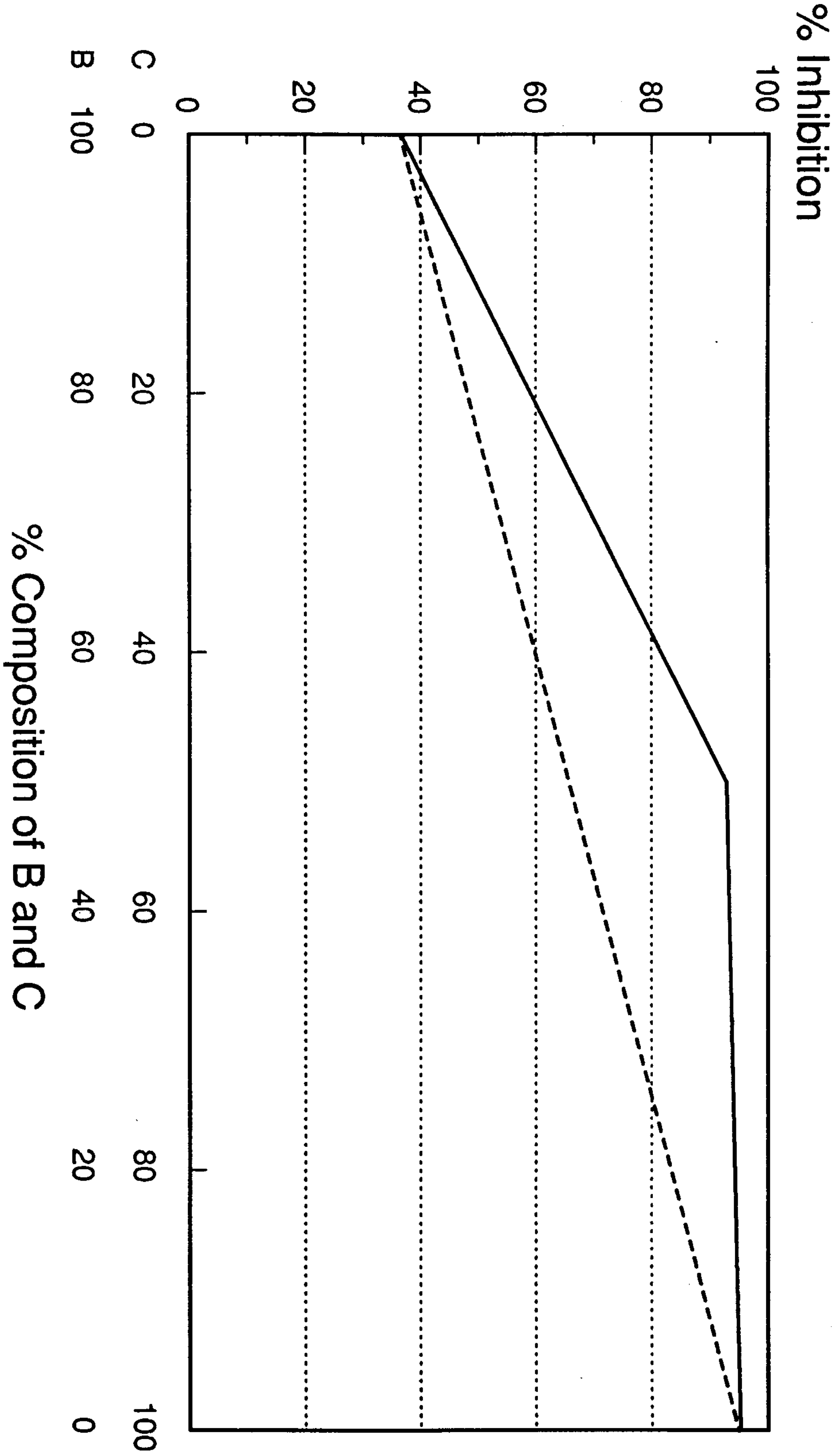
% Inhibition
100
80
60
40
20
0
C 0 20 40 60 80 100
B 100 80 60 40 20 0
% Composition of B and C

European Patent Office

# EUROPEAN SEARCH REPORT

Application Number
EP 97 20 2064

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | DE 41 07 322 A (CIBA-GEIGY)<br>* claims 1-15 *<br>----- | 1-4 | C02F5/14 |

| TECHNICAL FIELDS SEARCHED (Int.Cl.6) |
|---|
| C02F |

The present search report has been drawn up for all claims

| Place of search | Date of completion of the search | Examiner |
|---|---|---|
| THE HAGUE | 10 October 1997 | Fouquier, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)